(19) Europäisches Patentamt
European Patent Office
Office européen des brevets

(11) **EP 4 123 408 A1**

(12) **EUROPEAN PATENT APPLICATION**
published in accordance with Art. 153(4) EPC

(43) Date of publication:
**25.01.2023 Bulletin 2023/04**

(21) Application number: **21771083.9**

(22) Date of filing: **18.03.2021**

(51) International Patent Classification (IPC):
*G05D 1/02* (2020.01)  *A01B 69/00* (2006.01)
*B62D 6/00* (2006.01)  *G01C 21/28* (2006.01)
*B62D 113/00* (2006.01)

(52) Cooperative Patent Classification (CPC):
**A01B 69/00; B62D 6/00; G01C 21/28; G05D 1/02**

(86) International application number:
**PCT/JP2021/011182**

(87) International publication number:
**WO 2021/187594 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.03.2020 JP 2020048228**

(71) Applicant: **Tokyo Keiki Inc.
Tokyo, 144-0035 (JP)**

(72) Inventors:
• **ARAKANE, Hiroomi**
  **Tokyo 144-0035 (JP)**
• **YOSHIDA, Toyoori**
  **Tokyo 144-0035 (JP)**
• **FUNAYAMA, Masayuki**
  **Tokyo 144-0035 (JP)**

(74) Representative: **Bandpay & Greuter
30, rue Notre-Dame des Victoires
75002 Paris (FR)**

(54) **ERROR CORRECTION DEVICE**

(57)    An error correction device 34 installed on a work vehicle to correct errors in measurements made by a sensor device having a GNSS sensor and a gyro sensor comprises a first acquisition unit 341 that acquires a velocity vector of the work vehicle measured by the GNSS sensor represented in a local coordinate system, and an angular velocity measured by the gyro sensor represented in a sensor coordinate system having three axes with respect to the sensor device, a second acquisition unit 343 that acquires a steering amount of the work vehicle, a set position determination unit 344 that determines a set position located at a different position from the sensor device's position in the sensor coordinate system based on the acquired amount of steering, and a velocity vector correction unit 347 that corrects the velocity vector of the work vehicle measured by the GNSS sensor by calculating the velocity vector of the work vehicle at the determined set position based on the velocity vector of the work vehicle at the measurement position and the acquired angular velocity.

FIG.4

## Description

## Technical field

The embodiments of the present invention relate to the correction of measurements obtained from a sensor device installed in a work vehicle.

## Background Art

Conventionally, automatic steering controls are used to make a work vehicle, such as a tractor or rice transplanter, etc., track a specified travel route for the purpose of improving the efficiency of farming work. In such an automatic steering control, the steering of the work vehicle is controlled to keep the work vehicle on the travel route based on the deviation between the target position on the travel route and the actual position of the work vehicle.

As a technology related to automatic control of a work vehicle, an automatic steering system is known which comprises a satellite positioning module that outputs position information based on the satellite information from a satellite, a forward reference position calculation unit that calculates a forward reference position, which is a reference position for steering control of the work vehicle in forward traveling based on the position information, a backward reference position calculation unit that calculates a backward reference position, which is a reference position for steering control of the work vehicle in backward traveling based on the position information, a steering control unit that calculates and outputs a forward steering control signal from the deviation between the travel path and the forward reference position in forward traveling, and calculates and outputs a backward steering control signal from the deviation between the travel path and the backward reference position in backward traveling, and a steering mechanism that steers the work vehicle based on the steering control signals for forward and backward traveling (see, for example, Patent Document 1).

## Citation List

## Patent Document

Patent document 1: JP2018-120364

## Disclosure of the Invention

## Problems to be solved by the invention

While a velocity vector measured by a sensor device may be used in automatic steering control of a work vehicle, there may be a problem that the velocity vector may have errors of significantly deviating from the actual heading of the work vehicle depending on the driving conditions of the work vehicle.

The purpose of the present invention is to solve the above-mentioned problems and to provide a technique that can reduce errors in velocity vectors.

## Means for Solving the Problems

In order to solve the problems above, the error correction device in the present embodiment is an error correction device installed on a work vehicle to correct errors in measurements by a sensor device having a GNSS sensor and a gyro sensor includes a first acquisition unit that acquires a velocity vector of the work vehicle represented in a local coordinate system measured by the GNSS sensor, and an angular velocity represented in a sensor coordinate system having three axes with respect to the sensor device measured by the gyro sensor, a second acquisition unit that acquires a steering amount of the work vehicle, a set position determination unit that determines a set position represented in the sensor coordinate system and located at a position different from a position of the sensor device based on the acquired steering amount, and a velocity vector correction unit that corrects the velocity vector of the work vehicle measured by the GNSS sensor by calculating the velocity vector of the work vehicle at the determined set position based on the velocity vector of the work vehicle at the measured position and the acquired angular velocity.

## Advantageous Effects of the Invention

An aspect of the present invention provides an error correction device that can reduce errors in velocity vectors.

## Brief Description of the Drawings

Fig. 1 is a schematic side view of a farming tractor of the first embodiment.
Fig. 2 is a block diagram showing the overall configuration of the automatic steering control system of the first embodiment.
Fig. 3 is a block diagram showing the hardware configuration of the error correction device.
Fig. 4 is a block diagram showing the functional configuration of the error correction device.
Fig. 5 is a flowchart showing the operation of the error correction device.
Fig. 6 is a schematic front view showing a relative position vector.
Fig. 7 is a schematic plan view showing a relative position vector.
Fig. 8 is a schematic front view showing a velocity vector.
Fig. 9 is a flowchart showing the operation of the set position correction process.
Fig. 10 is a schematic plan view of a forward-moving tractor changing a course with front wheel steering.
Fig. 11 is a schematic plan view of a forward-moving tractor making a turn with front wheel steering.
Fig. 12 is a flowchart showing the operation of a vehicle heading calculation process.
Fig. 13 is a schematic plan view of a backward-moving tractor making a turn with front wheel steering.
Fig. 14 is a schematic plan view showing a forward-moving tractor changing a course with rear wheel steering.
Fig. 15 is a schematic plan view showing a forward-moving tractor making a turn with rear wheel steering.

## Best Mode for Carrying Out the Invention

The embodiments of the present invention will now be described with reference to the drawings.

<First embodiment>

(Configuration of a work vehicle)

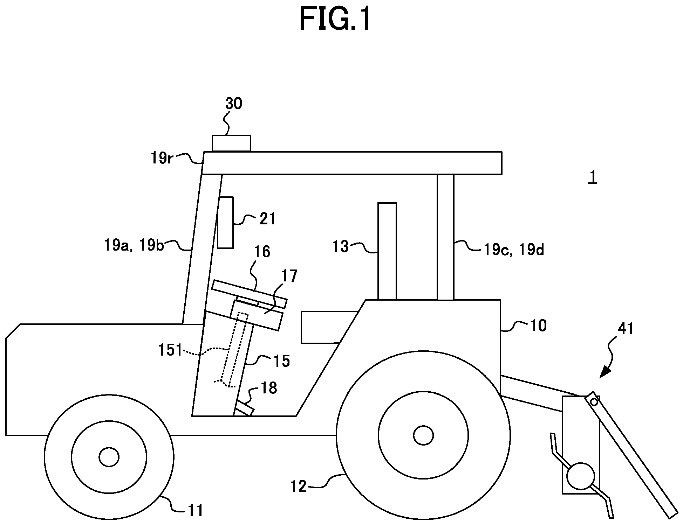

First, a work vehicle equipped with an error correction device of this embodiment will be described. Fig. 1 is a schematic side view of a farming tractor of the embodiment.
The vehicle steered by the automatic steering system of the present embodiment is a work vehicle, specifically a farming tractor 1 as shown in Fig. 1. The tractor 1 is a rear-wheel driven four-wheeled vehicle having a body 10, two front wheels 11 and two rear wheels 12. However, the vehicle may be any vehicle as long as it can be steered, not necessarily limited to a work vehicle. The tractor 1 also has a seat 13 for an operator to sit on, a steering column 15, a steering wheel 16, a steering actuator device 17, pedals 18 including gas pedal, brake pedal, etc., four supporting frames 19a to 19d, and a roof 19r. A rotary tiller 41, which is a work implement to be installed on a work vehicle, may be connected to the body 10 of the tractor 1 via a link mechanism.
A steering system is located within the steering column 15 that steers the tractor 1 by giving angles to the front wheels 11, and an input shaft 151 is disposed inside the steering column 15 to input the steering wheel angle, which is provided from the steering wheel 16 or the steering actuator device 17, into the steering system. A steering amount related to the rotation of the input shaft 151 is transmitted to the front wheels 11. The steering actuator device 17 is a retrofitted device to automatically steer the tractor 1 that is designed for manual steering, i.e., not equipped with an automatic steering control mechanism. The steering wheel 16 is provided at the top of the steering actuator device 17, and the upper end of the steering system's input shaft 151 is connected to the bottom of the same. The four supporting frames 19a to 19d each formed in an elongated shape are installed upright at different positions, i.e., the front, rear, left, and right of the body 10. The roof 19r formed in a substantially flat-plate shape as a whole is placed on the four supporting frames 19a to 19d.
A sensor device 30 is installed on the top surface of the roof 19r using the roof 19r as a base. It is desirable to install the sensor device 30 at the highest place of the tractor 1 such as the top of the roof 19r, since the sensor device 30 as described below includes a GNSS sensor that receives GNSS signals transmitted from satellites. In a case the tractor 1 does not have a roof 19r, the sensor device 30 may be installed on either one of the four supporting frames 19a to 19d that support the roof 19r using it as a base. An automatic steering control device 21 is installed on either one of the supporting frames 19a or 19b located at the front. The automatic steering control device 21 controls the automatic steering of the tractor 1.

(Configuration of the automatic steering control system)

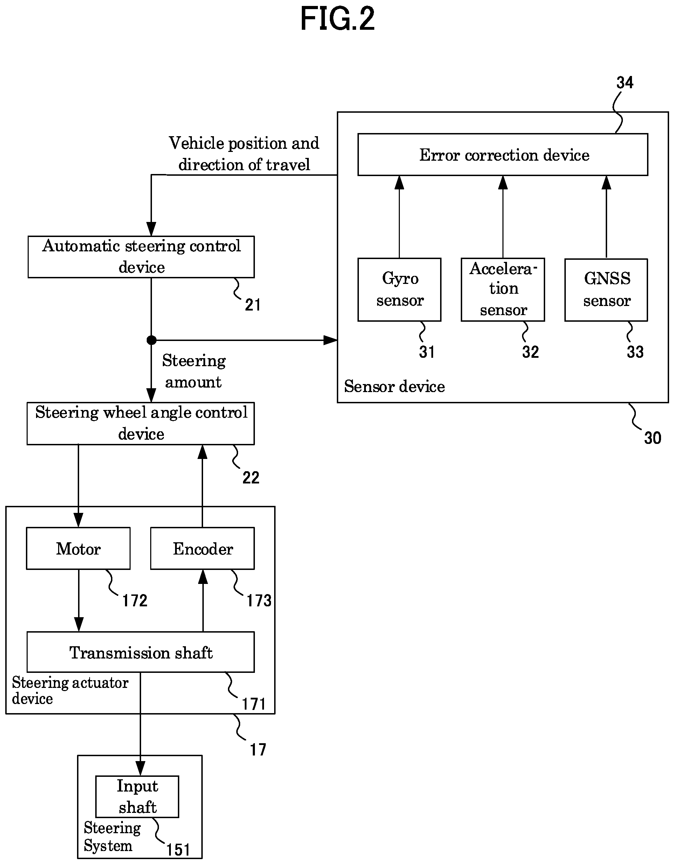

Fig. 2 is a block diagram showing the overall configuration of the automatic steering control system.
As shown in Fig. 2, the automatic steering control system provided in the tractor 1 includes a steering actuator device 17 that drives the input shaft 151 of the steering system, a sensor device 30, an automatic steering control device 21, and a steering wheel angle control device 22, which is not shown in Fig. 1.
The steering actuator device 17 includes a transmission shaft 171 that transmits drive power to the input shaft 151, a motor 172 that is an electric motor to drive the transmission shaft 171, and an encoder 173 that is a rotary encoder to detect a rotation amount and rotational position of the transmission shaft 171. The motor 172 may be any type of motor as long as it has sufficient torque to rotate the input shaft 151.
The automatic steering control device 21 outputs a steering amount based on the measurements of the sensor device 30, and the steering wheel angle control device 22 feedback-controls the steering actuator device 17 according to the steering amount instructed by the automatic steering control device 21. The steering actuator device 17 controls the motor 172 to drive the transmission shaft 171 so that the rotational position detected by the encoder 173 matches the desired rotational position.
Thus, retrofitting the tractor 1 with the steering actuator device 17, the sensor device 30, the automatic steering control device 21, and the steering wheel angle control device 22 enables an automatic steering of a tractor 1 configured to be manually steered.
The sensor device 30 includes a gyro sensor 31, an acceleration sensor 32, a GNSS sensor 33, and an error correction device 34, which are disposed in a same housing. This means that the gyro sensor 31, acceleration sensor 32, and GNSS sensor 33 are positioned at substantially the same position on the tractor 1. The gyro sensor 31 detects angular velocities around three axes to measure heading angle ξ, pitch angle θ, and roll angle φ of the tractor 1. The acceleration sensor 32 measures accelerations of the tractor 1 along three axes. The GNSS sensor 33 measures a vehicle position indicating the position of the tractor 1, and a velocity vector of the tractor 1. The error correction device 34 corrects errors in the values measured by the gyro sensor 31, the acceleration sensor 32, and the GNSS sensor 33.

The automatic steering control device 21 calculates a target traveling direction, which is a traveling direction of the tractor 1, from a vehicle position indicating the position of the tractor 1 detected by the GNSS sensor 33 and a planned target traveling route, so that the vehicle position tracks the target traveling route. Then the automatic steering control device 21 calculates a steering amount from a traveling direction error, which is a difference between the target traveling direction and the traveling direction of the tractor 1 based on a velocity vector obtained from the GNSS sensor 33, and outputs the steering amount to the steering wheel angle control device 22.

(Configuration of the error correction device)

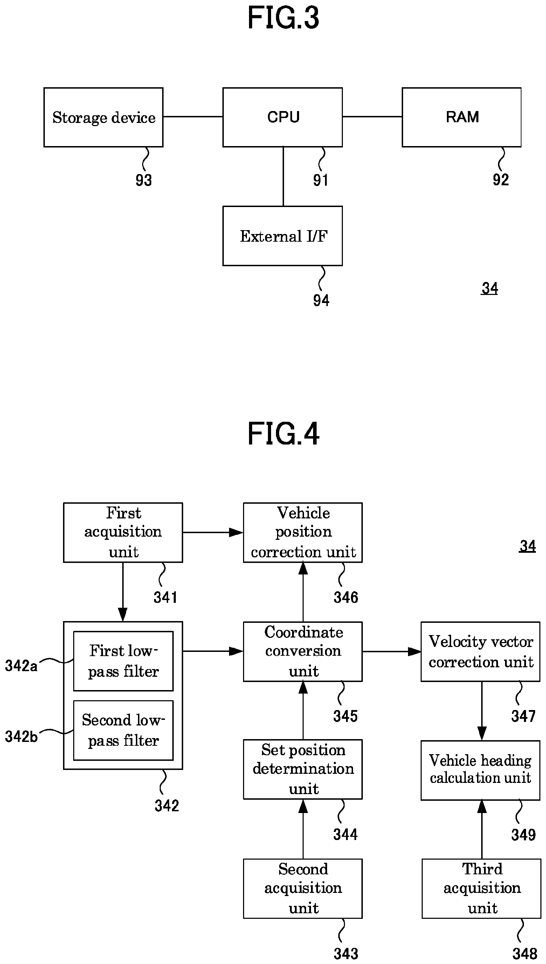

The hardware and functional configurations of the error correction device are described below. Figs. 3 and 4 are block diagrams respectively showing the hardware and functional configurations of the error correction device.

The error correction device 34 includes for the hardware a CPU (Central Processing Unit) 91, RAM (Random Access Memory) 92, storage device 93, and external I/F (Interface) 94, as shown in Fig. 3.

The CPU 91 and RAM 92 work together to perform the various functions described below, and the storage device 93 stores various data used in the processes performed by the various functions. The external I/F 94 handles data input and output to and from the gyro sensor 31, the acceleration sensor 32, the GNSS sensor 33, and the automatic steering control device 21. The automatic steering control device 21 may include a CPU, RAM, storage device, and external I/F, and may perform the various functions described below in place of the error correction device 34.

As shown in Fig. 4, the error correction device 34 includes, as its functional units, a first acquisition unit 341, a low-pass filter unit 342 comprising a first low-pass filter 342a and a second low-pass filter 342b, a second acquisition unit 343, a set position determination unit 344, a coordinate conversion unit 345, a vehicle position correction unit 346, a velocity vector correction unit 347, a third acquisition unit 348, and a vehicle heading calculation unit 349.

The first acquisition unit 341 acquires the measurements the gyro sensor 31, the acceleration sensor 32, and the GNSS sensors 33 measured respectively. The first low-pass filter 342a attenuates high-frequency signals higher than a predetermined first cutoff frequency of a time-series signal representing the measurements of the gyro sensor 31 acquired by the first acquisition unit 341. The second low-pass filter 342b attenuates high-frequency signals higher than the predetermined second cutoff frequency of a time-series signal representing the measurements of the acceleration sensor 32 acquired by the first acquisition unit 341.

In order to receive GNSS signals, it is desirable to mount the sensor device 30 on either one of the four supporting frames 19a to 19d or on the roof 19r supported by them, as the GNSS sensor 33 is included in the sensor device 30, as mentioned above. As the roof supporting members like the four supporting frames 19a to 19d of the present embodiment do not have sufficient rigidity on a work vehicle such as the tractor 1, high-frequency vibrations may be applied to the sensor device 30, especially when the work vehicle travels on uneven surfaces. Such high-frequency vibrations may cause errors in the measurement values, especially for the gyro sensor 31 and the acceleration sensor 32, but the low-pass filter unit 342 can reduce such errors.

The second acquisition unit 343 receives a steering amount output from the automatic steering control device 21. The set position determination unit 344 determines the set position based on the steering amount received by the second acquisition unit 343. The set position is the position where the measurement position of the sensor device 30 is projected onto the traveling surface of the tractor 1, i.e., the field surface, and is set at the center in the width direction of the tractor 1, and its position in the front-back direction of the tractor 1 is determined based on the steering amount.

The coordinate conversion unit 345 converts a relative position vector and angular velocity vector represented in the sensor coordinate system into respective vectors represented in the local coordinate system. The sensor coordinate system is a coordinate system having three axes, x, y, and z that are orthogonal to each other with the origin at the measurement position, which is the position where the sensor device 30 is located and where the sensor device 30 performs measurements. The x-axis is directed toward the front in the straightahead direction of the tractor 1, the y-axis toward the right in the width direction of the tractor 1, and the z-axis toward the bottom in the vertical direction of the tractor 1. The local coordinate system is a coordinate system with three axes each oriented north, east, and down. The relative position vector and angular velocity vector will be described in detail later.

The vehicle position correction unit 346 corrects the vehicle position of the tractor 1 represented in the local coordinate system measured by the GNSS sensor 33 at the upper part of the tractor 1, e.g., at the measurement position of the sensor device 30 mounted on the roof 19r in the present embodiment, to a vehicle position of the tractor 1 at the set position represented in the sensor coordinate system. The velocity vector correction unit 347 corrects a velocity vector, represented in the local coordinate system, of the tractor 1 measured by the GNSS sensor 33 at the measurement position of the sensor device 30 into a velocity vector at the set position.

The third acquisition unit 348 acquires a traveling direction indicating whether the tractor 1 is in a state of traveling forward or backward. The vehicle heading calculation unit 349 calculates a heading indicating the orientation of the body 10 of the tractor 1 based on the traveling state acquired by the third acquisition unit 348 and the velocity vector corrected by the velocity vector correction unit 347.

(Operation of Error Correction device)

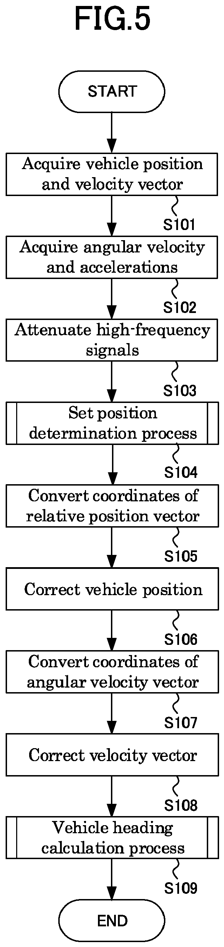

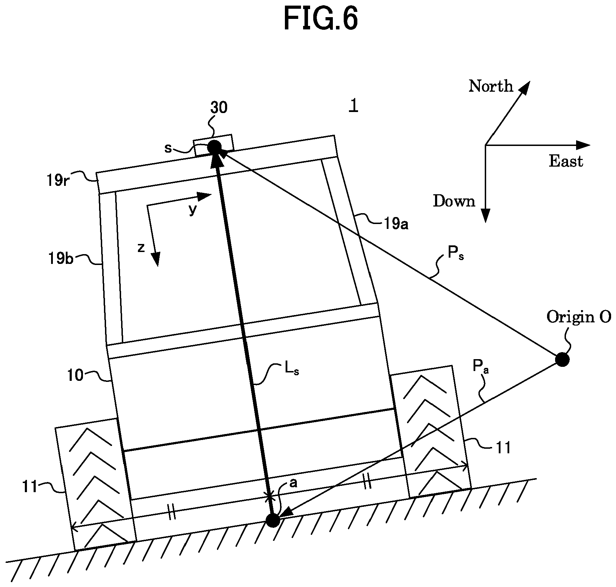

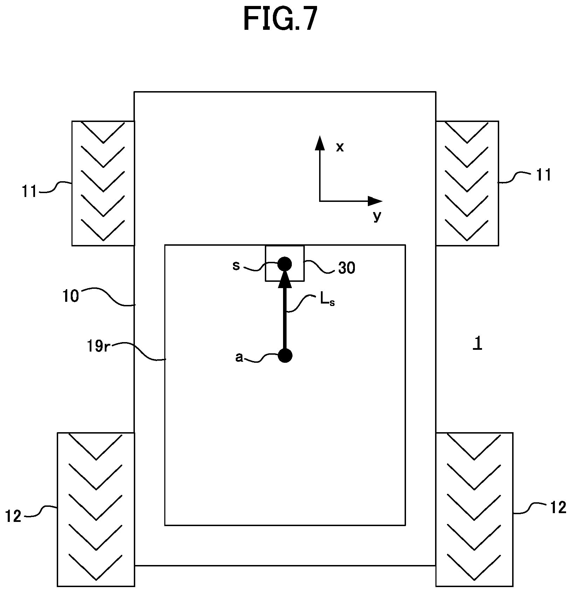

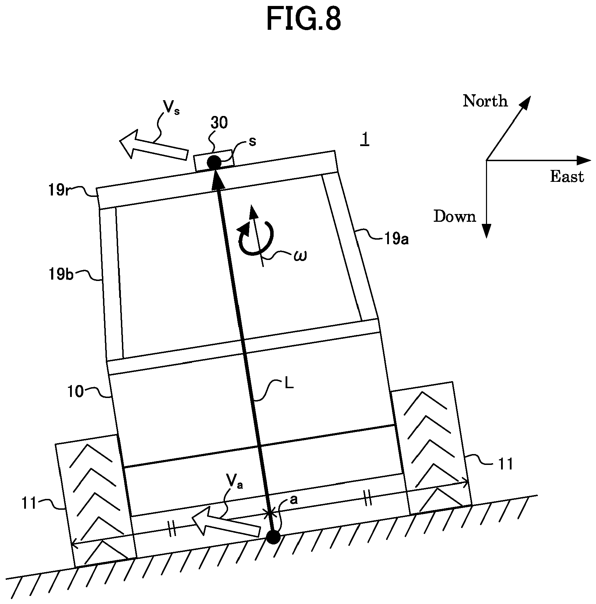

The operation of the error correction device is described below. Fig. 5 is a flowchart showing the operation of the error correction device. Figs. 6 and 7 are schematic front view and schematic plan view, respectively, showing relative position vectors. Fig. 8 is a schematic front view showing a velocity vector. The operations shown in Fig. 5 are to be repeated at predetermined intervals.

As shown in Fig. 5, the first acquisition unit 341 first acquires the vehicle position and velocity vector represented in the local coordinate system measured by the GNSS sensor 33 (S101), then, the angular velocity of the tractor 1 measured by the gyro sensor 31, and the acceleration of the tractor 1 measured by the acceleration sensor 32 (S102).

Next, the low-pass filter unit 342 attenuates high-frequency signals higher than a predetermined first cutoff frequency or a second cutoff frequency for each of the angular velocity and acceleration acquired by the first acquisition unit 341 (S103).

Next, the set position determination process described below is executed (S104).

After executing a set position determination process, the coordinate conversion unit 345 converts a relative position vector Ls shown in Figs. 6 and 7 that indicates the measurement position s relative to the origin at the set position a represented in the sensor coordinate system into a relative position vector L represented in the local coordinate system with the formula of L=C L$_s$ using the heading angle, pitch angle and roll angle of the tractor 1 measured by the gyro sensor 31 (S105). Here, C is a coordinate conversion matrix represented by the Formula 1 to convert coordinates from the sensor coordinate system to the local coordinate system.

$$C = \begin{bmatrix} C11 & C21 & C31 \\ C12 & C22 & C32 \\ C13 & C23 & C33 \end{bmatrix}$$

The elements of the coordinate conversion matrix C are defined by the following formulas using the heading angle $\xi$, pitch angle $\theta$, and roll angle $\varphi$.

$$C11 = \cos\xi \cdot \cos\theta$$

$$C12 = \sin\xi \cdot \cos\theta$$

$$C13 = -\sin\theta$$

$$C21 = -\sin\xi \cdot \cos\phi + \cos\xi \cdot \sin\theta \cdot \sin\phi$$

$$C22 = \cos\xi \cdot \cos\phi + \sin\xi \cdot \sin\theta \cdot \sin\phi$$

$$C23 = \cos\theta \cdot \sin\phi$$

$$C31 = \sin\xi \cdot \sin\phi + \cos\xi \cdot \sin\theta \cdot \cos\phi$$

$$C32 = -\cos\xi \cdot \sin\phi + \sin\xi \cdot \sin\theta \cdot \cos\phi$$

$$C33 = \cos\theta \cdot \cos\phi$$

Prior to the coordinate conversion, an initialization process generally called alignment is performed. In the initialization process, an initial heading (heading angle) and initial attitude (pitch angle and roll angle) of the tractor 1 are determined, and, in the coordinate conversion performed by the coordinate conversion unit 345, a heading angle $\xi$, pitch angle $\theta$, and roll angle $\varphi$ obtained by updating the initial heading and initial attitude with the angular velocity measured by the gyro sensor 31 are input to the coordinate conversion matrix C.

The pitch angle $\theta$ and roll angle $\varphi$ of the initial attitude are obtained from the following formulas, where g is the gravitational acceleration measured by the acceleration sensor 32 when the tractor 1 is at rest and ax, ay, az are each acceleration along the three axes.

$$a_x = g \cdot \sin\theta$$

$$a_y = -g \cdot \cos\theta \cdot \sin\phi$$

$$a_z = -g \cdot \cos\theta \cdot \cos\phi$$

The initial value of the heading angle $\xi$ is set based on the velocity vector measured by the GNSS sensor 33 while the tractor 1 is moving. Alternatively, values determined in advance may be used for the initial attitude and initial heading.

After coordinate transformation, the vehicle position correction unit 346 corrects the vehicle position measured at the measurement position s to the vehicle position at the set position determined by the set position correction process by calculating the position vector $P_a$ using the formula $P_a = P_s - L$, wherein $P_a$ is the position vector of the set position a relative to the origin O of the local coordinate system and $P_s$ is the position vector of the measurement position s (S106).

Next, the coordinate conversion unit 345 converts an angular velocity vector $\omega_s$ of the tractor 1 represented in the sensor coordinate system measured by the gyro sensor 31 to the angular velocity vector $\omega$ represented in the local coordinate system, with the formula $\omega = C\omega_s$ using the coordinate conversion matrix C (S107).

After coordinate conversion, the velocity vector correction unit 347 corrects the velocity vector by calculating the velocity vector $V_a$ using the formula $V_a = V_s - \omega \times L$, wherein $V_s$ is the velocity vector of the tractor 1 at the measurement position s measured by the GNSS sensor33, and $V_a$ is the velocity vector at the set position a (S108).

After correcting the velocity vector, the vehicle heading calculation process described below is executed (S109).

Thus, the error correction device 34 corrects each of the vehicle position and velocity vector measured at the measurement position s to the vehicle position and velocity vector at the set position a. By using the corrected vehicle position and velocity vectors, the automatic steering control device 21 can obtain more accurate vehicle position, direction and velocity of travel with reduced measurement errors caused by vibration of the sensor device 30, especially when the tractor 1 travels over uneven fields. In this way, accurate automatic steering of the tractor 1 by the automatic steering control device 21 can be achieved.

(Set position Correction Process)

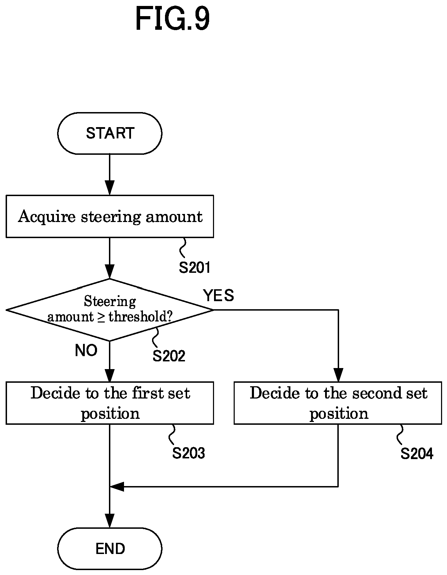

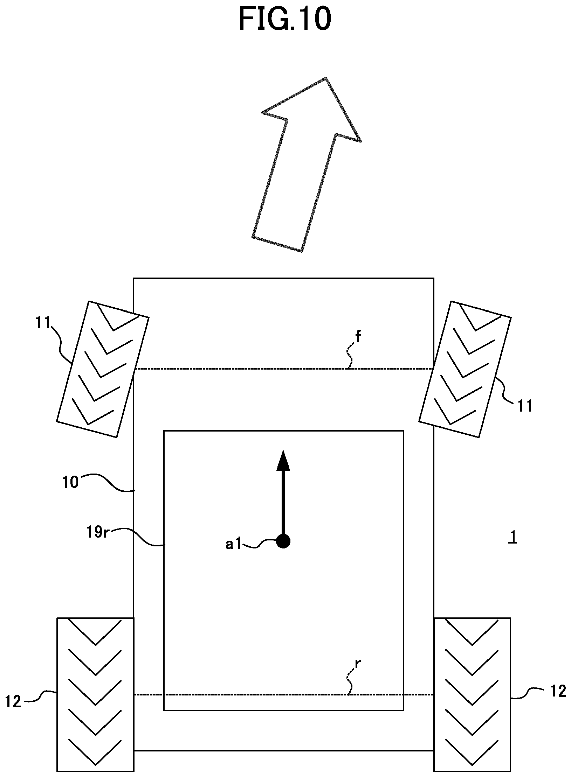

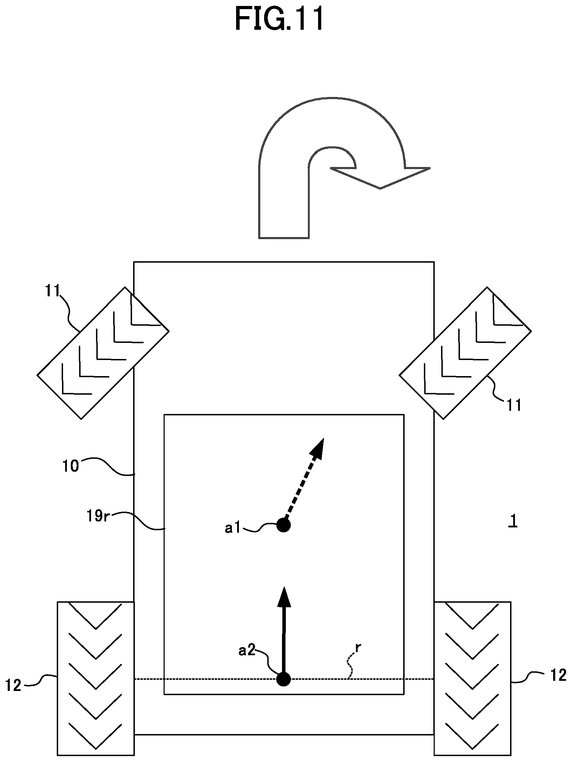

The operation of the set position correction process is described below. Fig. 9 is a flowchart showing the operation of the set position correction process. Figs. 10 and 11 are schematic plan views showing a forward traveling tractor performing a course change and a U-turn, respectively, with front wheel steering.

As shown in Fig. 9, first, the second acquisition unit 343 acquires a steering amount output by the automatic steering control device 21 (S201), and the set position determination unit 344 determines whether the acquired steering amount is greater than or equal to a predetermined threshold value (S202). Here, the threshold value is set to such an amount of steering that causes the tractor 1 to make a U-turn.

When the steering amount is not greater than the threshold value (S202, NO), the set position determination unit 344 decides the first set position a1 that is the vehicle's center of gravity or the vehicle's center of motion of the tractor 1 shown in Fig. 10 for the set position a (S203). The first set position a1 may be appropriate as long as it is located between the axle center f of the front wheels 11 and the axle center r of the rear wheels 12 in the front-back direction of the tractor 1.

On the other hand, when the steering amount is greater than the threshold value (S202, YES), the set position determination unit 344 decides the second set position a2 located at the axle center r of the rear wheels 12 shown in Fig. 11 for the set position a (S204). The second set position a2 may be appropriate as long as it is located closer to the rear wheels 12 side, or in other words, to the non-steerable wheels side, than the first set position a1 in the front-back direction of the tractor 1.

Thus, correcting the set position according to the steering amount allows the direction of the velocity vector $V_a$ at the set position a to be much closer to the direction of the tractor 1's body 10, especially when the tractor 1 is in a U-turn.

(Vehicle Heading Calculation Process)

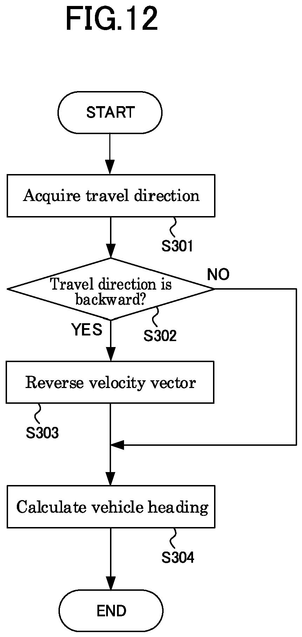

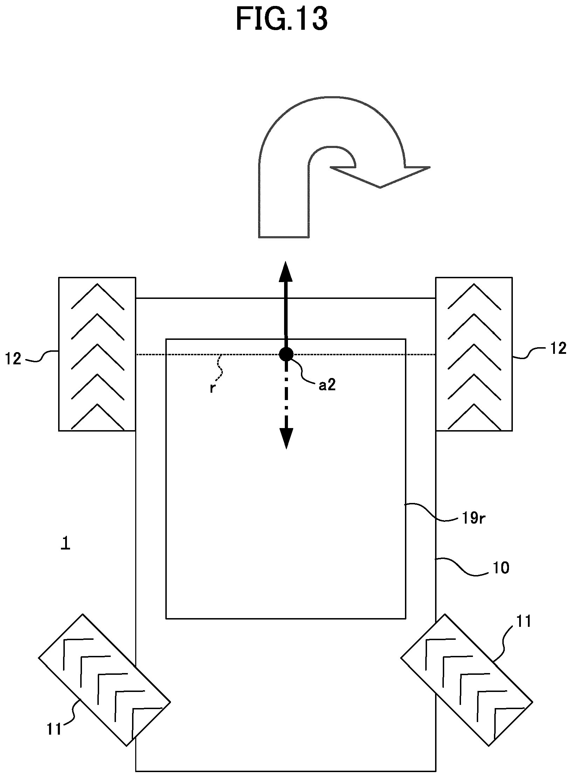

The vehicle heading calculation process will be described. Fig. 12 is a flowchart showing the operation of the vehicle heading calculation process. Fig. 13 is a schematic plan view of a tractor making a backward U-turn with front wheel steering.

As shown in Fig. 12, the third acquisition unit 348 first acquires a traveling direction indicating which the tractor 1 is in forward or backward traveling state (S301). The third acquisition unit 348 acquires the traveling direction from the position of a lever that shifts between forward moving or reverse moving, or from the position of the transmission gears whether in forward or reverse gears, which transmits the power from the engine.

Next, the vehicle heading calculation unit 349 determines whether the traveling direction acquired by the third acquisition unit 348 is backward or not (S302).

When the traveling direction is backward (S302, YES), the vehicle heading calculation unit 349 reverses the velocity vector $V_a$ in the x direction, that is, in the front-back direction of the tractor 1, as shown in Fig. 13 (S303), and calculates the vehicle heading from the direction of the reversed velocity vector $V_a$ (S304).

On the other hand, when the traveling direction is forward instead of backward (S302, NO), the vehicle heading calculation unit 349 calculates the vehicle heading from the direction of the velocity vector $V_a$ (S304).

Thus, when the tractor 1 is traveling backward, the vehicle heading can be calculated from the velocity vector $V_a$ by regarding the direction of the reversed velocity vector $V_a$ as the vehicle heading.

<Second embodiment>

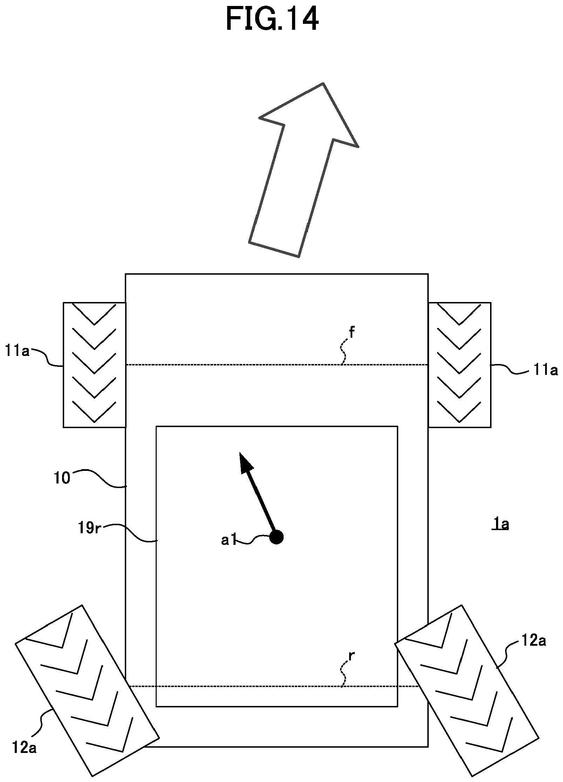

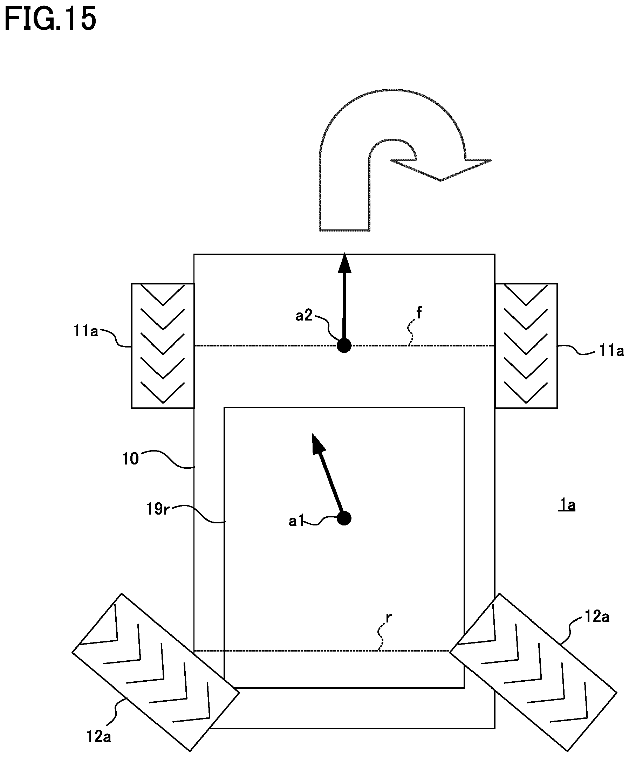

In the present embodiment, the tractor is rear-wheel-steered, and accordingly, the set position determined by the set position determination process in the error correction device is different from the first embodiment. Figs. 14 and 15 show schematic plan views of a rear-wheel-steered tractor making a forward course change and a forward U-turn, respectively.

As shown in Figs. 14 and 15, the tractor 1a in this embodiment is configured as a so-called rear-wheel-steered vehicle with non-steerable front wheels 11a and steerable rear wheels 12a.

As shown in Fig. 14, the set position in the case of the steering amount less than the threshold value, that is the first set position, is located between the center f of the front wheels 11a's axle and the center r of the rear wheels 12a's axle in the front-back direction of the tractor 1a, or preferably at the vehicle's center of gravity or the vehicle's center of motion, as in the first embodiment.

As shown in Fig. 15, the set position in the case of the steering amount greater than the threshold value, that is the second set position a2, is located at the center f of the front wheels 11a's axle, which is closer to the non-steerable wheels than the first set position a1 in the front-back direction of the tractor 1a.

Thus, placing the second set position a2 closer to the non-steerable wheels than the first set position a1 allows the error correction device to work not only for front-wheel steered vehicles but also for rear-wheel-steered vehicles.

While, in the embodiments described above, the vehicle position and velocity vector at the measurement position s are corrected to a vehicle position and velocity vector at the same set position a, the respective set positions a for each of the corrected vehicle position and velocity vector may be different from each other. For example, the vehicle position may be corrected to a vehicle position at the first set position a1 at all times, and only the velocity vector may be corrected to a velocity vector either at the first set position a1 or the second set position a2 depending on the steering amount.

The embodiments of the present invention have been presented by way of example only, and are not intended to limit the scope of the invention. The novel embodiments described herein may be embodied in a variety of other forms; furthermore, various omissions, substitutions and changes may be made without departing from the spirit of the invention. The embodiments and modifications are included in the scope or spirit of the present invention and in the appended claims and their equivalents.

**Reference Signs List**

    34 Error correction device

341 First acquisition unit
343 Second acquisition unit
344 Set position determination unit
347 Velocity vector correction unit

**Claims**

1. An error correction device, that corrects errors in measurements made by a sensor device disposed on a work vehicle and comprising a GNSS sensor and a gyro sensor, comprising:

    a first acquisition unit that acquires a velocity vector of the work vehicle represented in a local coordinate system measured by the GNSS sensor, and an angular velocity represented in a sensor coordinate system having three axes with respect to the sensor device measured by the gyro sensor;
    a second acquisition unit that acquires a steering amount of the work vehicle;
    a set position determination unit that determines a set position represented in the sensor coordinate system and located at a position different from a position of the sensor device based on the acquired steering amount; and
    a velocity vector correction unit that corrects the velocity vector of the work vehicle measured by the GNSS sensor by calculating the velocity vector of the work vehicle at the determined set position based on the velocity vector of the work vehicle at the measured position and the acquired angular velocity.

2. The error correction device according to Claim 1, wherein
the set position determination unit determines a first set position to be the set position when the acquired steering amount is less than a predetermined threshold value, and determines a second set position to be the set position which is different from the first set position when the acquired steering amount is equal to or greater than the threshold value.

3. The error correction device according to Claim 2, wherein

    either only front wheels of the work vehicle are steerable or only rear wheels of the work vehicle are steerable,
    the first set position is located between the front and rear wheels of the work vehicle in the front-back direction of the work vehicle, and
    the second set position is located closer to non-steerable wheels in the front-back direction than the first set position is.

**4.** The error correction device according to any one of claims 1 to 3, further comprising a vehicle heading calculation unit that calculates the direction of the corrected velocity vector as the vehicle heading of the work vehicle.

**5.** The error correction device according to claim 4, further comprising a third acquisition unit that acquires a traveling direction indicating whether the work vehicle is traveling forward or backward, and when the acquired traveling direction is backward, the vehicle heading calculation unit calculates the reversed orientation of the corrected velocity vector as the vehicle heading of the work vehicle.

**6.** The error correction device according to any one of claims 1 to 5, further comprising

a coordinate conversion unit
that converts coordinates of a relative position vector represented in the sensor coordinate system pointing at a measurement position where the sensor device is installed and originated from a set position that is located at a different position from the sensor device's position, into a relative position vector represented in the local coordinate system based on the acquired angular velocity, and
that converts coordinates of an angular velocity vector of the work vehicle based on the acquired angular velocity represented in the sensor coordinate system into an angular velocity vector represented in the local coordinate system based on the acquired angular velocity,
wherein the velocity vector correction unit calculates the velocity vector of the work vehicle at the determined set position based on the velocity vector of the work vehicle at the measurement position, the coordinate-converted angular velocity vector, and the coordinate-converted relative position vector.

**7.** The error correction device according to claim 6, wherein

the velocity vector correction unit calculates the velocity vector of the work vehicle at the determined set position with a formula $V_a = V_s - \omega \times L$, wherein $V_s$ is the velocity vector of the work vehicle at the measurement position, $V_a$ is the velocity vector of the work vehicle at the set position, $\omega$ is the coordinate-converted angular velocity vector, and L is the coordinate-converted relative position vector.

**8.** The error correction device according to any one of claims 6 or 7, further comprising

a low-pass filter that attenuates a high-frequency signal higher than a predetermined first cutoff frequency of a time series signal of angular velocity measured by the gyro sensor, wherein the coordinate conversion unit converts the coordinates of the relative position vector based on the angular velocity of which the high-frequency signal is attenuated.

# FIG.1

# FIG.2

Vehicle position and
direction of travel

Error correction device —34

Automatic steering control
device
—21

Gyro
sensor
—31

Accelera-
tion
sensor
—32

GNSS
sensor
—33

Sensor device

—30

Steering
amount

Steering wheel angle control
device
—22

Motor —172

Encoder —173

Transmission shaft
—171

Steering actuator
device

—17

Input
shaft

Steering
System —151

# FIG.3

Storage device — CPU — RAM

93      91      92

External I/F

94

<u>34</u>

# FIG.4

<u>34</u>

First acquisition unit

341

Vehicle position correction unit

346

342a → First low-pass filter

342b → Second low-pass filter

342

Coordinate conversion unit

345

Set position determination unit

344

Second acquisition unit

343

Velocity vector correction unit

347

Vehicle heading calculation unit

349

Third acquisition unit

348

# FIG.5

```
        ┌─────────┐
        │  START  │
        └─────────┘
             │
             ▼
┌───────────────────────────┐
│  Acquire vehicle position │
│   and velocity vector     │
└───────────────────────────┘  S101
             │
             ▼
┌───────────────────────────┐
│   Acquire angular velocity │
│    and accelerations       │
└───────────────────────────┘  S102
             │
             ▼
┌───────────────────────────┐
│  Attenuate high-frequency │
│        signals            │
└───────────────────────────┘  S103
             │
             ▼
┌║─────────────────────────║┐
│     Set position          │
│  determination process    │
└║─────────────────────────║┘  S104
             │
             ▼
┌───────────────────────────┐
│   Convert coordinates of  │
│   relative position vector│
└───────────────────────────┘  S105
             │
             ▼
┌───────────────────────────┐
│   Correct vehicle position│
└───────────────────────────┘  S106
             │
             ▼
┌───────────────────────────┐
│   Convert coordinates of  │
│   angular velocity vector │
└───────────────────────────┘  S107
             │
             ▼
┌───────────────────────────┐
│   Correct velocity vector │
└───────────────────────────┘  S108
             │
             ▼
┌║─────────────────────────║┐
│     Vehicle heading       │
│   calculation process     │
└║─────────────────────────║┘  S109
             │
             ▼
        ┌─────────┐
        │   END   │
        └─────────┘
```

# FIG.6

# FIG.7

# FIG.8

# FIG.9

START

Acquire steering amount

S201

Steering amount ≥ threshold? — YES

S202

NO

Decide to the first set position

S203

Decide to the second set position

S204

END

# FIG.10

# FIG.11

# FIG.12

START

Acquire travel direction
S301

Travel direction is backward? — NO

YES
S302

Reverse velocity vector
S303

Calculate vehicle heading
S304

END

# FIG.13

# FIG.14

# FIG.15

## INTERNATIONAL SEARCH REPORT

| | International application No. |
|---|---|
| | PCT/JP2021/011182 |

### A. CLASSIFICATION OF SUBJECT MATTER

G05D  1/02(2020.01)i;  A01B  69/00(2006.01)i;  B62D  6/00(2006.01)i;  G01C 21/28(2006.01)i; B62D 113/00(2006.01)n
FI: G05D1/02 W; B62D6/00; G01C21/28; A01B69/00 303M; B62D113:00
According to International Patent Classification (IPC) or to both national classification and IPC

### B. FIELDS SEARCHED

Minimum documentation searched (classification system followed by classification symbols)
G05D1/02; A01B69/00; B62D6/00; G01C21/28; B62D113/00

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2016/060283 A1 (KOMATSU LTD.) 21 April 2016 (2016-04-21) entire text, all drawings | 1-8 |
| A | JP 2011-59065 A (SONY CORP.) 24 March 2011 (2011-03-24) entire text, all drawings | 1-8 |
| A | JP 2016-53553 A (HITACHI CONSTRUCTION MACHINERY CO., LTD.) 14 April 2016 (2016-04-14) entire text, all drawings | 1-8 |
| A | WO 2010/045350 A1 (HEMISPHERE GPS LLC) 22 April 2010 (2010-04-22) entire text, all drawings | 1-8 |

☐ Further documents are listed in the continuation of Box C.      ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 28 May 2021 (28.05.2021) | 08 June 2021 (08.06.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

Information on patent family members

International application no.

PCT/JP2021/011182

| Patent Documents referred in the Report | Publication Date | Patent Family | Publication Date |
|---|---|---|---|
| WO 2016/060283 A1 | 21 Apr. 2016 | US 2017/0153649 A1 entire text, all drawings CA 2941233 A1 | |
| JP 2011-59065 A | 24 Mar. 2011 | US 2011/0066376 A1 entire text, all drawings EP 2295989 A1 CN 102023232 A | |
| JP 2016-53553 A | 14 Apr. 2016 | US 2016/0069675 A1 entire text, all drawings EP 2995906 A1 | |
| WO 2010/045350 A1 | 22 Apr. 2010 | (Family: none) | |

Form PCT/ISA/210 (patent family annex) (January 2015)

**EP 4 123 408 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018120364 A